# EUROPÄISCHE PATENTSCHRIFT

(11) **EP 1 439 336 B1**
(45) Veröffentlichungstag und Bekanntmachung des Hinweises auf die Patenterteilung: **23.11.2011**
(21) Anmeldenummer: 04000815.3
(22) Anmeldetag: 16.01.2004
(51) Int. Cl.: F16H 61/21, B60T 1/06, B60W 30/18

(54) **Automatisiertes Getriebesystem mit einer Getriebebremse**
Automatic transmission system with a transmission brake
Système de transmission automatisée avec frein de transmission

(30) Priorität: 18.01.2003 GB 0301171
(43) Veröffentlichungstag der Anmeldung: 21.07.2004
(73) Patentinhaber: Schaeffler Technologies GmbH & Co. KG, 91074 Herzogenaurach (DE)
(72) Erfinder: Bates, Ian Richard Joseph, HD3 3XZ Huddersfield, West Yorkshire (GB); Pollak, Burkhard, Dr., 77515 Bühl (DE); Song, In Ho, CV31 1 BU Warwickshire (GB); Park, Youngkeun, CV 34 5BD Warwickshire (GB); Rieger, Christian, 76476 Bischweier (DE)

(56) Entgegenhaltungen:
- WO-A-02/066870
- JP-A- 7 026 989
- JP-A- 9 046 808

## Beschreibung

Die vorliegende Erfindung betrifft automatisierte Getriebesysteme und insbesondere automatisierte Getriebesysteme, in welchen eine automatisch betätigte Getriebekupplung zwischen einem Fahrzeugmotor und einem mehrstufigen Getriebe bereitgestellt ist.

Die Erfindung betrifft insbesondere die Steuerung solcher Systeme, wenn auf einer Steigung heruntergeschaltet wird, um die Motorbremse des Fahrzeugs bereitzustellen. In solchen Umständen, wenn die Kupplung automatisch ausgerückt wird, um das Einlegen eines niedrigeren Gangs zu gestatten, geht die Motorbremswirkung , die beim höheren Gang anlag, verloren, wodurch es dem Fahrzeug möglich wird, schneller zu werden. In ähnlichen Umständen bei einem Handschaltgetriebe würde dies erwartet werden und der Fahrer kann geeignete Maßnahmen treffen, um diese Wirkung abzufangen. Jedoch erfolgt bei einem automatisierten Getriebesystem, wenn das System automatisch ohne Eingabe vom Fahrer herunterschaltet, die Beschleunigung des Fahrzeugs unerwartet und würde den Fahrer beunruhigen.

Diese und andere Nachteile werden durch ein automatisiertes Getriebe-System mit den Merkmalen gemäß Anspruch 1 gelöst. Die Druckschrift JP7026989 wird als nächster Stand der Technik angesehen und offenbart die Merkmale des Oberbegriffs des Anspruchs 1.

Auf diese Art kann, wenn die Kupplung für das Gangherunterschalten ausgerückt wird, das Motorbremsdrehmoment, das verloren wird, durch Anlegen eines Bremsdrehmoments durch die Getriebebremse ersetzt werden. Gemäß einer bevorzugten Ausführungsform wird auch ein Mittel zum Überwachen der Position eines Kupplungsbetätigungselements und zum Senden eines Signals, das dies bezeichnet, an die Steuereinheit bereitgestellt, wobei die Steuereinheit die Getriebebremse anlegt, so dass das Bremsdrehmoment, welches dadurch angelegt wird, die Verringerung an Kupplungsdrehmoment ausgleicht, wenn die Kupplung ausgerückt wird.

Gemäß einer alternativen Ausführungsform regelt die Steuereinheit die Getriebebremse, um die Fahrzeuggeschwindigkeit während des Gangherunterschaltens gleich zu halten.

Die Erfindung wird nun nur mittels Beispiel mit Bezugnahme der folgenden Zeichnungen beschrieben, wobei:
Figur 1 schematisch ein Fahrzeug mit einem Kupplungsbetätigungselement, das mit einem Elektromotor angetrieben ist, darstellt;
Figur 2 eine graphische Darstellung der Fahrzeuggeschwindigkeit über die Zeit während eines Gangherunterschaltvorgangs zeigt, während das Fahrzeug unter Motorbremse steht;
Figur 3 eine typische graphische Darstellung des effektiven Motorbremsdrehmoments für jeden Gang zeigt;
Figur 4 eine typische graphische Darstellung des Kupplungsdrehmoments über die Kupplungsbetätigungselementbewegung zeigt;
Figur 5 ein Flussdiagramm ist, das einen Schaltvorgang auf einen niedrigeren Gang mit einer Ausführungsform des Getriebesystems zeigt, das in Figur 1 dargestellt ist;
Figur 6 ein Flussdiagramm ist, das einen Schaltvorgang auf einen niedrigeren Gang mit einer alternativen Ausführungsform des Getriebesystems zeigt, das in Figur 1 dargestellt ist;
Figur 7 ein Flussdiagramm ist, welches das Anfahren des Fahrzeugs vom Stillstand auf einer Steigung mit dem Getriebesystems zeigt, das in Figur 1 dargestellt ist; und
Figur 8 eine graphische Darstellung ist, welche die Pulse zeigt, die von den Fahrzeuggeschwindigkeitsfühlem empfangen werden, die jedem der Räder eines Fahrzeugs beigefügt sind.

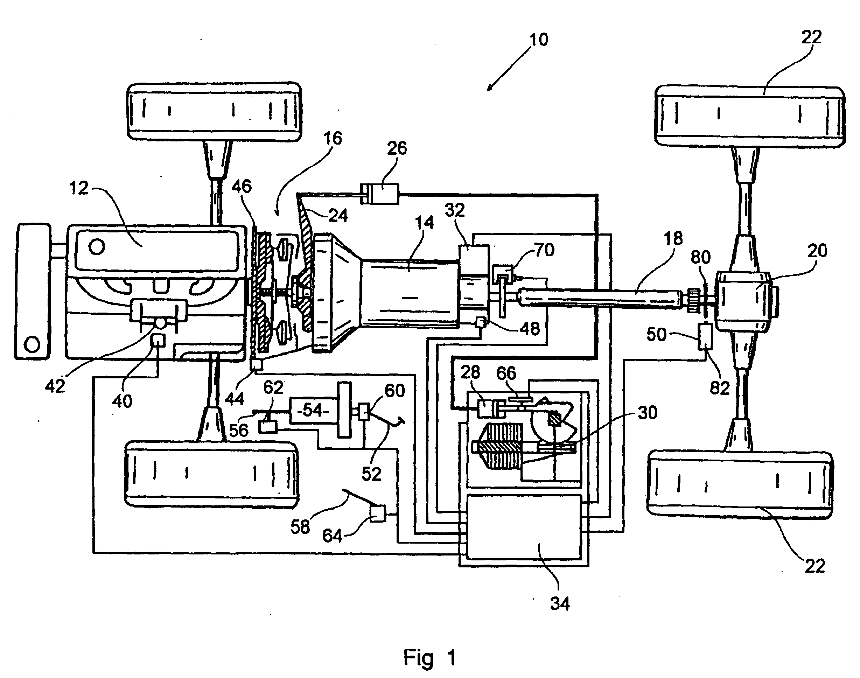

Wie in Fig. 1 dargestellt, weist ein Fahrzeug 10 einen Verbrennungsmotor 12 auf, welcher mit einem Getriebe 14 über eine Kupplung 16 verbunden ist. Das Getriebe 14 ist mit einer Antriebswelle 18 und einer hinteren Achse 20 verbunden, um die hinteren Räder 22 des Fahrzeugs 10 anzutreiben.

Die Kupplung 16 wird durch eine Ausrückgabel 24 betätigt, die ihrerseits durch einen folgegesteuerten Hydraulikzylinder 26 unter der Steuerung eines Hauptzylinders 28 betätigt wird, der seinerseits durch einen Elektromotor 30 angetrieben wird. Alternativ kann der folgegesteuerte Hydraulikzylinder ausgewählt mit einer hydraulischen Druckversorgung oder einem Auffangbehälter mittels eines Regelventilmittels verbunden sein. Gemäß alternativer Ausführungsform kann der Kupplungsausrückhebel durch pneumatische Mittel oder elektromechanische Mittel betätigt werden, die mit dem Ausrückhebel entweder direkt oder durch Kabelmittel verbunden sind.

Das Getriebe 14 ist mit Gangeinlegmittel 32 bereitgestellt, wie zum Beispiel in WO 02/066870 offenbart, wodurch das Einlegen eines ausgewählten Gangs durch hydraulische, pneumatische oder elektromechanische Mittel gesteuert werden kann.

Der Elektromotor 30 und das Gangeinlegmittel 32 werden durch eine elektronische Steuereinheit 34 gesteuert.

Ein Fühler 40 überwacht das Drosselklappenmittel 42 des Motors 12 und sendet ein Signal, das den Grad der Drosselklappenöffnung bezeichnet, an die Steuereinheit 34.

Ein Fühler 44 überwacht die Drehzahl eines Schwungrads 46 des Motors 12 und sendet ein Signal, das die Motordrehzahl bezeichnet, an die Steuereinheit 34.

Das Getriebe 14 ist mit einem Gangfühler 48 ausgestattet, welcher ein Signal, das den eingelegten Gang bezeichnet, an die Steuereinheit 34 sendet. Ein Fühler 50 überwacht die Drehzahl der Antriebswelle 18 und sendet ein Signal, das die Fahrzeuggeschwindigkeit bezeichnet, an die Steuereinheit 34. Ein Fühler 66 überwacht die Position des Kupplungshauptzylinders 28 und sendet ein Signal, das die Kupplungsposition bezeichnet, an die Steuereinheit 34.

Ein Haupt- oder Betriebsbremssystem des Fahrzeugs umfasst ein Bremspedal 52, welches einen Hauptzylinder 54 betätigt, der mit den folgegesteuerten Zylindern, die an jedem der Räder 22 des Fahrzeugs angeordnet sind, mittels eines Hydraulikschaltkreises 56 verbunden ist. Eine Feststell- oder Handbremse 58 ist ebenfalls bereitgestellt, durch welche die Bremsen, die einem oder mehreren der Räder 22 zugeordnet sind, angelegt werden können, wenn das Fahrzeug geparkt ist. Ein Fühler 60, zum Beispiel ein Bremslichtschalter, der dem Bremspedal 52 zugeordnet ist; und/oder ein Druckfühler 62, der den Druck im Bremskreis 56 misst; und ein Sensor 64, welcher der Handbremse 58 zugeordnet ist, sendet ein Signal, welches die Betätigung der Betriebsbremse beziehungsweise der Handbremse bezeichnet, an die Steuereinheit 34.

Mit dem oben offenbarten Getriebesystem setzt die Steuereinheit 34 die Signale der verschiedenen Fühler dazu ein, um die Betätigung der Kupplung 16 und das Einlegen und Ausrücken der Gänge während des Anfahrens aus dem Stillstand, beim Schalten von einem Gang zum anderen und beim Anhalten automatisch zu steuern, wie zum Beispiel in den Patentbeschreibungen EP0038113; EP0043660; EP0059035; EP101220; WO 92/13208; und WO 02/066870 beschrieben.

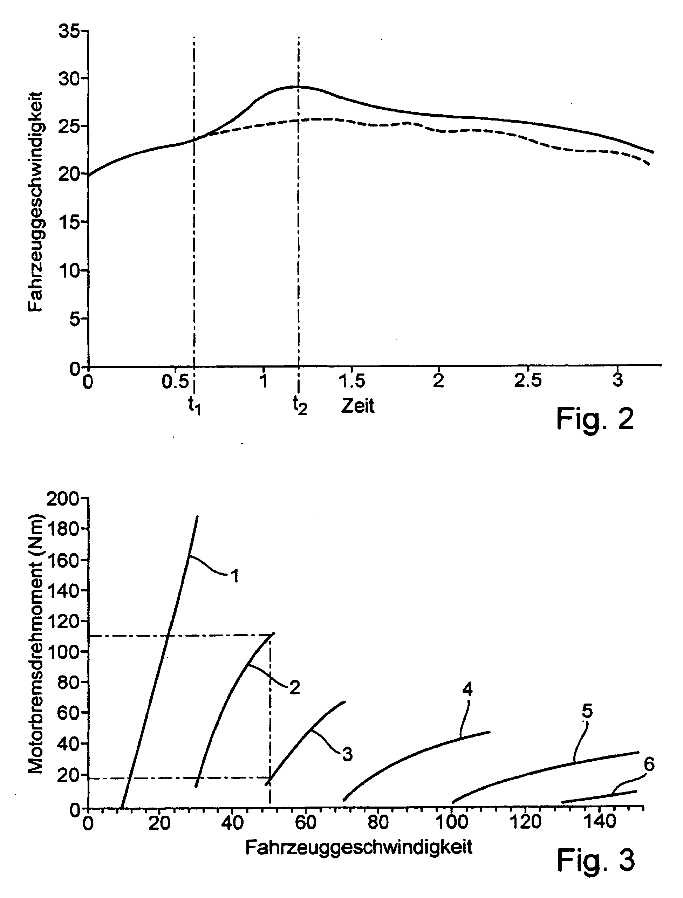

Wenn ein Fahrzeug bergab fährt, kann die Geschwindigkeit des Fahrzeugs durch Einsatz der Motorbremse gesteuert werden. Wie in Figur 3 dargestellt, hängt das wirksame Motorbremsdrehmoment für eine gegebene Fahrzeuggeschwindigkeit vom eingelegten Gang ab. Des Weiteren kann ein deutlicher Bremsdrehmomentunterschied zwischen einem Gang und einem anderen bei einer gegebenen Fahrzeuggeschwindigkeit gegeben sein, zum Beispiel wie in Figur 3 dargestellt, so dass ein Herunterschalten vom dritten in den zweiten Gang bei 50 km/h das Motorbremsdrehmoment von 20Nm auf 110Nm erhöht. Folglich kann eine plötzliche Veränderung in der Verzögerung beim Herunterschalten um einen Gang auftreten. Zusätzlich kann, wenn die Kupplung für den Gangwechsel ausgerückt ist, das Fahrzeug anfänglich auf Grund des Verlustes der Motorbremse, während die Kupplung ausgerückt ist, schneller werden. Figur 2 zeigt (in Volllinie) eine typische graphische Darstellung der Fahrzeuggeschwindigkeit über die Zeit während eines Schaltvorgangs auf einen niedrigeren Gang, wenn ein Fahrzeug bergab fährt, wobei das Fahrzeug beschleunigt, wenn die Kupplung 16 zum Zeitpunkt t₁ ausgerückt wird, und schlagartig verzögert, wenn die Kupplung 16 wiederum zum Zeitpunkt t₂ eingerückt wird. Die Wirkungen, die unter solchen Umständen auftreten, sind bei handgeschalteten Getrieben kein Problem, wenn der Gangwechsel durch den Fahrer eingeleitet wird, der folglich den möglichen Auswirkungen gegenüber wachsam sein wird. Wenn jedoch ein Herunterschalten automatisch eingeleitet wird, wären solche Auswirkungen für den Fahrer unerwartet und würden ihn beunruhigen.

Gemäß der vorliegenden Erfindung ist eine Getriebebremse 70 auf der Antriebswelle 18 bereitgestellt. Diese Getriebebremse 70 wird hydraulisch, pneumatisch oder durch elektromechanische Mittel unter der Steuerung der Steuereinheit 34, wie im Folgenden genauer beschrieben, betätigt, um das Kupplungsdrehmoment und das Getriebebremsdrehmoment während des Herunterschaltens der Gänge zu vermischen, um die Auswirkungen zu mildern.

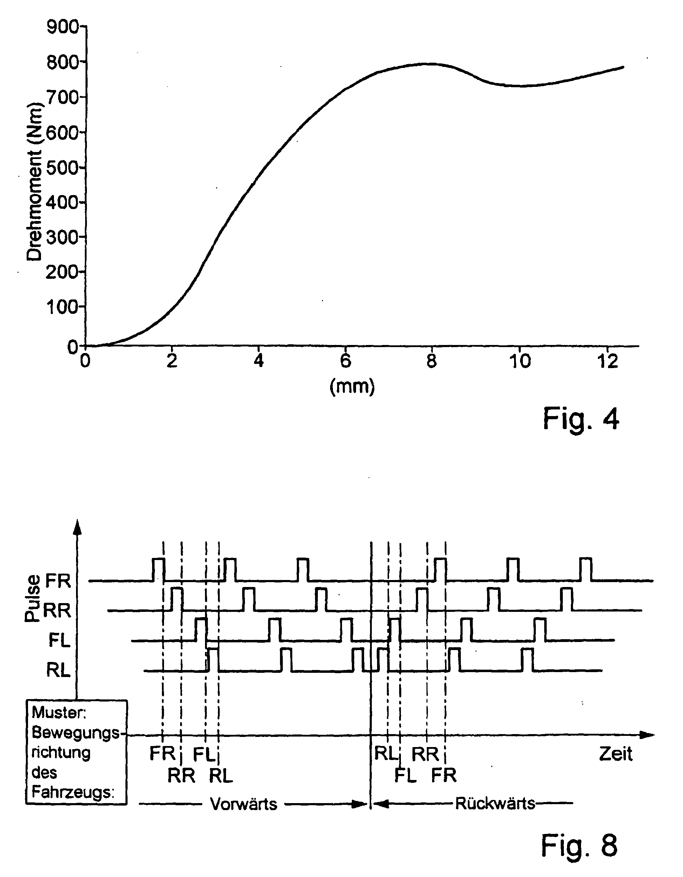

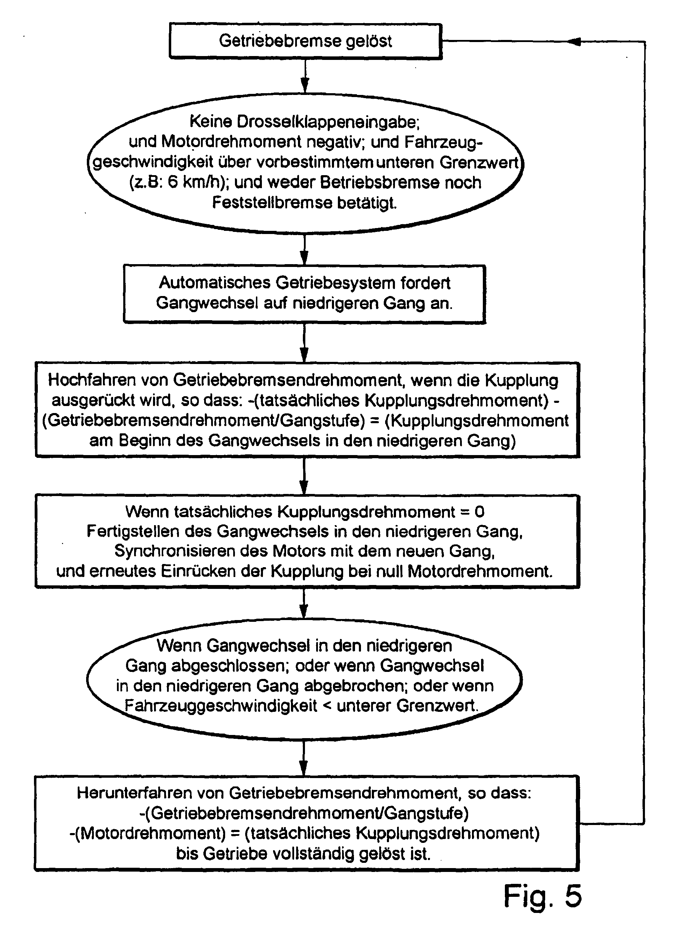

Wie in Figur 5 dargestellt, ist das Motordrehmoment negativ, wenn die Signale von den Fühlern 40, 44, 50, 60, 62 und 64 anzeigen, dass es keine Drosselklappeneingabe gibt, wobei die Fahrzeuggeschwindigkeit über einem vorbestimmten unteren Grenzwert, typischerweise 6 km/h, liegt und weder die Betriebsbremse noch die Feststellbremse angelegt sind, wobei in Abhängigkeit von der Fahrzeuggeschwindigkeit die Steuereinheit dann ein Herunterschalten in einen niedrigeren Gang einleiten kann. Wenn die Kupplung 16 ausgerückt wird, steuert die Steuereinheit das Anlegen der Getriebebremse 70, so dass das Bremsdrehmoment, das durch die Getriebebremse 70 angelegt wird, die Verringerung beim Kupplungsdrehmoment ausgleicht. Dies kann durch den Einsatz einer Zuordnung von Kupplungsdrehmoment über Position, wie sie durch den Fühler 66 gemessen wird, dargestellt in Figur 4, und einer entsprechenden Zuordnung von Getriebebremsendrehmoment über Bremsposition oder Druck im Getriebebremskreis erfolgen.

Sobald die Kupplung 16 vollständig ausgerückt ist, wird der gerade eingerückte Gang ausgerückt, der Motor wird mit dem neuen Gang synchronisiert, der neue Gang eingelegt und die Kupplung 16 bei null Motordrehmoment wiederum eingerückt. Bei Fertigstellung oder bei Abbruch des Herunterschaltens; oder wenn die Fahrzeuggeschwindigkeit unter den vorbestimmten unteren Grenzwert sinkt; oder die Betriebsbremsen oder die Handbremse angelegt werden, verringert die Steuereinheit 34 das Drehmoment, das durch die Getriebebremse 70 angelegt ist, um einen sanften Übergang des Drehmoments zwischen der Bremse 70 und der Kupplung 16 bereitzustellen, so dass das Bremsdrehmoment, das durch die Getriebebremse angelegt ist, durch das Motorbremsdrehmoment ohne schlagartige Verzögerung ersetzt wird.

Gemäß einer alternativen Ausführungsform der Erfindung kann die Steuereinheit 34 das Bremsdrehmoment, das durch die Getriebebremse 70 angelegt ist, verringern, während das Kupplungsdrehmoment ansteigt. Dies kann durch den Einsatz der Drehmomentszuordnungen der Kupplung 16 und der Getriebebremse 70 erzielt werden, wie oben dargestellt.

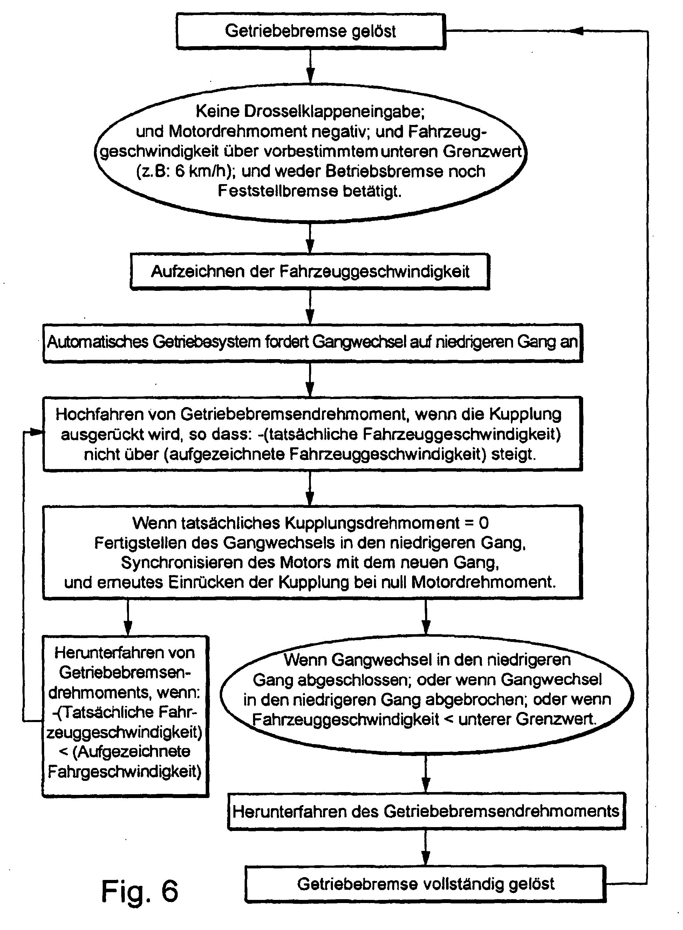

Gemäß einer weiteren Ausführungsform der Erfindung, wie in Figur 6 dargestellt, wird, wenn die Steuereinheit 34 entscheidet, einen Gangwechsel in den niedrigeren Gang unter Verwendung der oben offenbarten Kriterien einzuleiten, die Geschwindigkeit über der Straße unmittelbar vor der Einleitung des Gangwechsel in den niedrigeren Gang aufgezeichnet und die Steuereinheit 34 betätigt die Getriebebremse 70, um ausreichend Bremsdrehmoment anzulegen, um zu verhindem, dass die Fahrzeuggeschwindigkeit über die aufgezeichnete Geschwindigkeit ansteigt, wobei dies unter Einsatz eines geschlossenen Regelkreises geschehen kann.

Bei Fertigstellung oder bei Abbruch des Herunterschaltens; oder wenn die Fahrzeuggeschwindigkeit unter den vorbestimmten unteren Grenzwert sinkt; oder die Betriebsbremsen oder die Handbremse angelegt werden, dann verringert die Steuereinheit 34 das Drehmoment, das durch die Getriebebremse 70 angelegt ist. Das Drehmoment, das durch die Getriebebremse 70 angelegt ist, wird auf geregelte Weise verringert, so dass sich ein sanfter Übergang zwischen dem Bremsen durch die Getriebebremse 70 und die Motorbremse ergibt. Wenn sich während der Verringerung des Bremsdrehmoments, das durch die Getriebebremse 70 angelegt wird, die Fahrzeuggeschwindigkeit über die aufgezeichnete Fahrzeuggeschwindigkeit erhöht und der Gangwechsel in einen niedrigeren Gang nicht abgebrochen worden ist; oder die Betriebsbremsen oder die Handbremse nicht angelegt worden sind, dann kann die Steuereinheit 34 das Bremsdrehmoment, das durch die Getriebebremse 70 angelegt ist, erhöhen, um die Geschwindigkeit des Fahrzeugs auf unter den aufgezeichneten Wert zu verringern.

Unter Einsatz der obigen Verfahren kann die Getriebebremse 70 verwendet werden, um die Beschleunigung des Fahrzeugs bei Ausrücken der Kupplung 16 zu verhindern und eine sanfte Verzögerung des Fahrzeugs beim Abschließen des Gangwechsels auf einen niedrigeren Gang bereitzustellen, wie durch die gestrichelte Linie in Figur 2 der Zeichnungen dargestellt.

Die Getriebebremse 70 der vorliegenden Erfindung kann des Weiteren eingesetzt werden, um beim Anfahren des Fahrzeugs auf einer Steigung unterstützend zu wirken, wie in Figur 6 der Zeichnungen dargestellt. Wenn ein Fahrzeug auf einer Steigung mit einem automatisierten Getriebesystem der Art, die oben offenbart ist, anfährt, kann das Fahrzeug beim Ausrücken der Kupplung 16, um einen Anfahrgang einzulegen, wenn die Betriebsbremsen oder die Feststellbremse des Fahrzeugs nicht angelegt sind, die Steigung in die Richtung, die entgegengesetzt der gewünschten ist, zurückrollen. Um dieses Problem zu lösen, wurde vorgeschlagen, einen Kriechmodus einzuleiten, der die Auswahl eines Anfahrgangs und teilweises Einrücken der Kupplung umfasst, um ein vorbestimmtes Kupplungsdrehmoment vor dem Lösen der Feststellbremse oder der Betriebsbremsen des Fahrzeugs anzulegen. Auf zum Beispiel steilen Steigungen oder wo sich eine Verzögerung in der Betätigung der Drosselklappe für das Wegfahren ergibt, kann dies außerordentliches Schleifen der Kupplung verursachen, was zu hohen thermischen Belastungen und zu Kupplungsverschleiß führt. Ähnliche Probleme treten auf, wenn der Fahrer versucht, das Fahrzeug auf einer Steigung durch Betätigen der Drosselklappe im Stillstand zu halten.

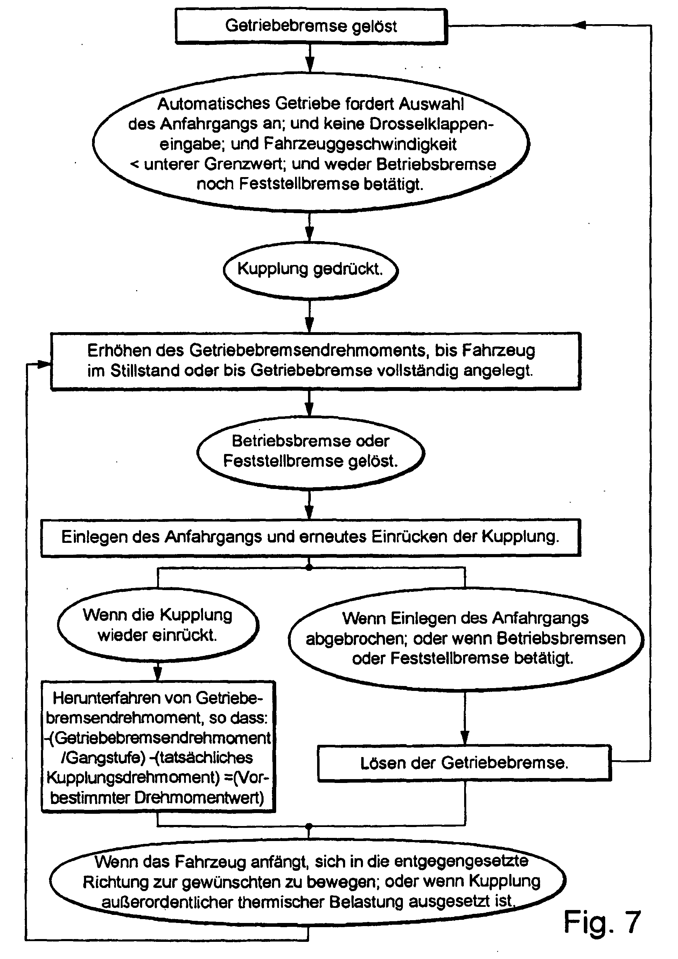

Mit dem Getriebe gemäß der vorliegenden Erfindung kann die Steuereinheit 34 die Getriebebremse 70 beim Anfahren steuern, um ein Bremsdrehmoment anzulegen, welches das Fahrzeug im Stillstand hält, wodurch das gesamte oder ein Anteil des Kupplungsdrehmoments ersetzt wird. Zum Beispiel, wie in Figur 7 dargestellt, wenn die Steuereinheit 34 das Einlegen eines Anfahrgangs anfordert und die Signale von den Fühlern 40, 44, 50, 60, 62 und 64 anzeigen, dass es keine Drosselklappeneingabe gibt, wobei die Fahrzeuggeschwindigkeit unter einem vorbestimmten unteren Grenzwert liegt, was anzeigt, dass sich das Fahrzeug im Stillstand befindet, und entweder die Betriebsbremse oder die Feststellbremse angelegt ist, dann kann die Steuereinheit 34 die Getriebebremse 70 anlegen, so dass die Getriebebremse 70 das Fahrzeug auf einer Steigung im Stillstand hält. Das Anlegen der Getriebebremse 70 kann durch die Steuereinheit 34 gesteuert werden, so dass das Bremsdrehmoment, das durch die Getriebebremse 70 angelegt wird, ansteigt, während die Kupplung 16 ausgerückt wird, um das Einlegen eines Anfahrgangs zu gestatten. Alternativ kann die Getriebebremse 70 unter der Steuerung der Steuereinheit 34 angelegt werden, während die Feststellbremse oder die Betriebsbremsen des Fahrzeugs nach Einlegen eines Anfahrgangs gelöst werden.

Sobald der Anfahrgang eingelegt worden ist, rückt die Steuereinheit 34 die Kupplung 16 wiederum ein. Zum gleichen Zeitpunkt verringert die Steuereinheit 34 das Bremsdrehmoment, das durch die Getriebebremse 70 angelegt wird, so dass das wirksame Drehmoment, das durch die Kupplung 16 und die Getriebebremse 70 angelegt wird, ausreicht, um das Fahrzeug auf der Steigung im Stillstand zu halten. Dies kann durch Verringern des Drehmoments geschehen, das durch die Getriebebremse 70 angelegt wird, während das Drehmoment, das durch die Kupplung 16 angelegt wird, ansteigt, so dass das Gesamtdrehmoment dem vorbestimmten Drehmomentwert, der durch die Kupplung allein angelegt wird, in Systemen, die bisher vorgeschlagen wurden, um einen Kriechmodus einzuleiten, gleich kommt. Alternativ kann die Steuereinheit 34 das Lösen der Getriebebremse 70 steuem, wobei geschlossene Regelkreissysteme eingesetzt werden, welche zum Beispiel die Bewegung des Fahrzeugs in die entgegengesetzte Richtung zu jener, die gewünscht wird, und/oder die thermische Belastung der Kupplung 16 überwachen.

Die Steuereinheit 34 steuert auch die Getriebebremse 70, um das Bremsdrehmoment derselben zu verringem, wenn die Drosselklappe betätigt wird, um das Fahrzeug wegzufahren oder wenn die Feststellbremse oder die Betriebsbremsen des Fahrzeugs nicht gelöst werden oder wieder angelegt werden.

Der Fühler 50 umfasst ein gezähntes Rad 80, welches zur Drehung mit der Antriebswelle 18 angebracht ist. Ein induktiver Abnehmer 82 ist in einer den Zähnen des Rades 80 gegenüberliegenden Lage angeordnet. Wenn sich das gezähnte Rad 80 dreht, erzeugt der Abnehmer 82 ein gepulstes Signal, wobei die Frequenz des Signals proportional zur Drehzahl des Rades 80 ist. Gemäß einer alternativen Ausführungsform der Erfindung kann der Abnehmer 50 durch eine Mehrzahl von ähnlichen Abnehmern ersetzt werden, wobei jeder Abnehmer einem unterschiedlichen Rad des Fahrzeugs zugeordnet ist. Solche Abnehmer können einen Teil eines Antiblockier Bremssystems bilden. Da die gezähnten Räder 80 der Abnehmer ähnlich sind, sind die gepulsten Signale, die von jedem der Abnehmer erzeugt werden, von derselben Frequenz, wobei aber die Pulse phasenverschoben sein werden, wie in Figur 8 gezeigt. Da sich die Räder 22 des Fahrzeugs im Allgemeinen mit derselben Geschwindigkeit drehen, insbesondere wenn die Fahrzeuggeschwindigkeit niedrig ist, bleibt das Muster der Pulse der vier Signale im Wesentlichen wenigstens kurzfristig konstant. Das Muster wird sich jedoch umkehren, was von der Fahrtrichtung des Fahrzeugs abhängt, wie in Figur 8 dargestellt. Der Einsatz von vielfachen Fühlem 50 kann folglich zum Beispiel verwendet werden, um zu bestimmen, ob sich das Fahrzeug in die entgegengesetzte Richtung zu jener, die gewünscht ist, bewegt, wenn das Fahrzeug auf einer Steigung anfährt.

Um dies zu erreichen, wird das Muster der Pulse, die von zwei oder mehreren Fühlern 50 erzeugt werden, aufgezeichnet, während das Fahrzeug zum Stillstand kommt, und wird mit dem Muster der Pulse verglichen, wenn das Fahrzeug beim nächsten Mal wieder vom Stillstand aus anfährt.

Es sollte beachtet werden, dass die Mehrzahl der Fühler 50 nicht unterschiedlichen Rädem des Fahrzeugs zugeordnet sein muss, sondem auch dem gleichen Bauteil, zum Beispiel der Antriebswelle 18, zugeordnet sein kann, vorausgesetzt dass die Zähne auf den Rädern 80 der Fühler winkelig zueinander nicht gezüchtet sind, so dass die Pulse der Signale, die durch die Fühler erzeugt werden, phasenverschoben sind. Alternativ kann ein Fühler, der ein einzelnes gezähntes Rad 80 mit zwei Abnehmern 82 aufweist, wobei einer zum anderen versetzt ist, um so zwei gepulste Signale zu erzeugen, deren Pulse phasenverschoben sind, eingesetzt werden. Wo nur zwei Signale verwendet werden, müssen die Pulse des einen Signals zu jenen des anderen Signals um weniger als die halbe Frequenz der Pulse versetzt sein. Auf diese Weise ist sichergestellt, dass sich eine Umkehr im Muster bei Umkehr der Bewegungsrichtung des Fahrzeugs ergibt. Zum Beispiel, wenn nur die Fühler FR und RR in Figur 8 verwendet werden, dann ergibt sich für die Drehung in eine Richtung ein kurzer Abstand zwischen aufeinanderfolgenden Pulsen der Fühler FR und RR und ein langer Abstand zwischen aufeinanderfolgenden Pulsen der Fühler RR und FR, während sich für die Drehung in die entgegengesetzte Richtung ein langer Abstand zwischen aufeinanderfolgenden Pulsen der Fühler FR und RR und ein kurzer Abstand zwischen aufeinanderfolgenden Pulsen der Fühler RR und FR ergibt. Mit vier Fühlem ergibt sich bei Umkehrung ein Wechsel in der Abfolge der Pulse der vier Fühler, zum Beispiel von FR:RR:FL:RL auf RL:FL:RR:FR.

## Patentansprüche

1. Automatisiertes Getriebesystem für ein Fahrzeug, umfassend ein mehrstufiges Getriebe (14), das mit einem Motor (12) mittels einer Getriebekupplung (16) verbunden ist, eine Getriebebremse (70), die auf einen Bauteil (18) des Getriebes zwischen der Getriebekupplung (16) und den angetriebenen Rädern (22) des Fahrzeugs wirkt, eine elektronische Steuereinheit (34), Mittel zum Erfassen der Betätigung der Getriebebremse (70) und zum Senden eines dies bezeichnenden Signals an die Steuereinheit (34), Mittel zum Erfassen des Motordrehmoments und zum Senden eines dies bezeichnenden Signals an die Steuereinheit (34); Mittel (50) zum Erfassen der Fahrzeuggeschwindigkeit und zum Senden eines dies bezeichnenden Signals an die Steuereinheit (34), Mittel (48) zum Erfassen der Tatsache, ob ein Gangwechsel nach unten angefordert ist oder gerade durchgeführt wird, und zum Senden eines dies bezeichnenden Signals an die Steuereinheit (34), Mittel (60, 62, 64) zum Erfassen der Tatsache, ob eine Betriebsbremse (52, 54, 56, 58) des Fahrzeugs angelegt ist, und zum Senden eines dies bezeichnenden Signals an die Steuereinheit (34); wobei die Steuereinheit (34) den Betrieb der Getriebebremse (70) steuert, um ein Bremsdrehmoment an das Getriebe anzulegen, wenn das Motordrehmoment negativ ist, die Fahrzeuggeschwindigkeit über einem vorbestimmten Wert liegt, ein Gangwechsel nach unten angefordert worden ist oder gerade durchgeführt wird und die Betriebsbremsen (52, 54, 56, 58) des Fahrzeugs nicht angelegt sind, wobei die Getriebebremse (70) angelegt wird, um zu verhindern, dass die Geschwindigkeit des Fahrzeugs über den Wert der Geschwindigkeit des Fahrzeugs steigt, wenn ein Schaltvorgang auf einen unteren Gang eingeleitet wird, **dadurch gekennzeichnet, dass** die Getriebebremse (70) ausgerückt wird, um zu gestatten, dass das Fahrzeug auf den Wert der Geschwindigkeit des Fahrzeugs beschleunigt, wenn ein Schaltvorgang auf einen unteren Gang eingeleitet wird, wenn die Geschwindigkeit des Fahrzeugs während eines Gangwechsels nach unten deutlich unter den Wert fällt.

2. Automatisiertes Getriebesystem gemäß Anspruch 1, **dadurch gekennzeichnet, dass** die Getriebebremse (70) angelegt wird, wenn die Kupplung (16) ausgerückt wird, so dass das Drehmoment, das durch die Getriebebremse (70) aufgebracht wird, den Verlust an Motorbremse ersetzt, wenn die Kupplung (16) ausgerückt wird.

3. Automatisiertes Getriebesystem gemäß Anspruch 1, **dadurch gekennzeichnet, dass** die Geschwindigkeit des Fahrzeugs, wenn ein Schaltvorgang auf einen unteren Gang eingeleitet wird, durch die Steuereinheit (34) aufgezeichnet wird.

4. Automatisiertes Getriebesystem gemäß jedem der vorangehenden Ansprüche, **dadurch gekennzeichnet, dass**, wenn das Drehmoment, das durch die Kupplung (16) übertragen wird, auf null verringert wird, der Gangwechsel abgeschlossen ist, die Motordrehzahl mit dem neuen Gang synchronisiert ist und die Kupplung (16) wiederum eingerückt ist.

5. Automatisiertes Getriebesystem gemäß Anspruch 4, **dadurch gekennzeichnet, dass** bei dem erneuten Einrücken der Kupplung (16) das Drehmoment, das durch die Getriebebremse (70) angelegt wird, nach unten geführt wird, bis das Getriebebremsendrehmoment null ist.

6. Automatisiertes Getriebesystem gemäß Anspruch 5, **dadurch gekennzeichnet, dass** das Getriebebremsendrehmoment nach unten geführt wird, um eine geschmeidige Verzögerung des Fahrzeugs bereitzustellen.

7. Automatisiertes Getriebesystem gemäß Anspruch 6, **dadurch gekennzeichnet, dass** das Getriebebremsendrehmoment nach unten geführt wird, während die Kupplung (16) wieder eingerückt wird, wobei die Verringerung an Drehmoment, das durch die Getriebebremse (70) angelegt wird, dem Anstieg an Drehmoment, das durch die Kupplung (16) übertragen wird, nachfolgt.

8. Automatisiertes Getriebesystem gemäß Anspruch 6 oder 7 **dadurch gekennzeichnet, dass** das Drehmoment, das durch die Getriebebremse (70) angelegt wird, dividiert durch das Verhältnis des eingelegten Gangs, minus das Motordrehmoment gleich dem tatsächlichen Drehmoment ist, das durch die Kupplung (16) übertragen wird.

## Claims

1. Automatic transmission system for a vehicle, comprising a multi-stage transmission (14) which is connected to an engine (12) by means of a clutch (16), a transmission brake (70) which acts on a component (18) of the transmission between the clutch (16) and the driven wheels (22) of the vehicle, an electronic control unit (34), means for detecting the activation of the transmission brake (70) and for transmitting a signal denoting this to the control unit (34), means for detecting the engine torque and for transmitting a signal denoting this to the control unit (34); means (50) for detecting the vehicle speed and for transmitting a signal denoting this to the control unit (34), means (48) for detecting whether a gear speed change in the downward direction is requested or is currently being carried out, and for transmitting a signal denoting this to the control unit (34), means (60, 62, 64) for detecting whether a service brake (52, 54, 56, 58) of the vehicle is applied, and for transmitting a signal denoting this to the control unit (34); wherein the control unit (34) controls the operation of the transmission brake (70) in order to apply a braking torque to the transmission if the engine torque is negative, the vehicle speed is above a predetermined value, a gear speed change in the downward direction has been requested or is currently being carried out and the service brakes (52, 54, 56, 58) of the vehicle are not applied, wherein the transmission brake (70) is applied in order to prevent the speed of the vehicle rising above the value of the speed of the vehicle when a gear shifting process to a lower gear speed is initiated, **characterized in that** the transmission brake (70) is disengaged in order to permit the vehicle to accelerate to the value of the speed of the vehicle when a gear shifting process to a lower gear speed is initiated, when the speed of the vehicle drops significantly below the value during the gear speed change in the downward direction.

2. Automatic transmission system according to Claim 1, **characterized in that** the transmission brake (70) is applied when the clutch (16) is disengaged, such that the torque which is applied by the transmission brake (70) replaces the loss of engine brake when the clutch (16) is disengaged.

3. Automatic transmission system according to Claim 1, **characterized in that** the speed of the vehicle, when a gear shifting process to a lower gear speed is initiated, is recorded by the control unit (34).

4. Automatic transmission system according to any of the preceding claims, **characterized in that** when the torque which is transmitted by the clutch (16) is reduced to zero, the gear speed change is terminated, the engine speed is synchronized with the new gear speed and the clutch (16) is engaged again.

5. Automatic transmission system according to Claim 4, **characterized in that** when the clutch (16) is engaged again, the torque which is applied by the transmission brake (70) is adjusted in the downward direction until the transmission brake torque is zero.

6. Automatic transmission system according to Claim 5, **characterized in that** the transmission brake torque is adjusted in the downward direction in order to make available a smooth deceleration of the vehicle.

7. Automatic transmission system according to Claim 6, **characterized in that** the transmission brake torque is adjusted in the downward direction while the clutch (16) is engaged again, wherein the reduction in torque which is applied by the transmission brake (70) follows the increase in torque which is transmitted by the clutch (16).

8. Automatic transmission system according to Claim 6 or 7, **characterized in that** the torque which is applied by the transmission brake (70), divided by the ratio of the applied gear speed, minus the engine torque is equal to the actual torque which is transmitted by the clutch (16).

## Revendications

1. Système de transmission automatisée pour un véhicule, comprenant une transmission multiétagée (14), qui est connectée à un moteur (12) au moyen d'un embrayage de transmission (16), un frein de transmission (70), qui agit sur un composant (18) de la transmission entre l'embrayage de transmission (16) et les roues motrices (22) du véhicule, une unité de commande électronique (34), des moyens pour détecter l'actionnement du frein de transmission (70) et pour envoyer un signal communiquant cet actionnement à l'unité de commande (34), des moyens pour détecter l'actionnement du couple moteur et pour envoyer un signal communiquant cet actionnement à l'unité de commande (34) ; des moyens (50) pour détecter la vitesse du véhicule et pour envoyer un signal communiquant cette vitesse à l'unité de commande (34), des moyens (48) pour détecter le fait qu'un changement de rapport vers le bas est demandé ou est justement effectué, et pour envoyer un signal communiquant ce fait à l'unité de commande (34), des moyens (60, 62, 64) pour détecter le fait qu'un frein de service (52, 54, 56, 58) du véhicule est appliqué, et pour envoyer un signal communiquant ce fait à l'unité de commande (34), l'unité de commande (34) commandant le fonctionnement du frein de transmission (70) afin d'appliquer un couple de freinage à la transmission, lorsque le couple moteur est négatif, que la vitesse du véhicule est au-dessus d'une valeur prédéterminée, qu'un changement de rapport vers le bas a été demandé ou est justement effectué et que les freins de service (52, 54, 56, 58) du véhicule ne sont pas appliqués, le frein de transmission (70) étant appliqué afin d'éviter que la vitesse du véhicule augmente au-dessus de la valeur de la vitesse du véhicule, lorsqu'une opération de changement de rapport à un rapport inférieur est amorcée, **caractérisé en ce que** le frein de transmission (70) est débrayé afin de permettre l'accélération du véhicule à la valeur de la vitesse du véhicule lorsqu'une opération de changement de rapport à un rapport inférieur est amorcée, si la vitesse du véhicule pendant un changement de rapport vers le bas chute nettement en dessous de cette valeur.

2. Système de transmission automatisée selon la revendication 1, **caractérisé en ce que** le frein de transmission (70) est appliqué lorsque l'embrayage (16) est débrayé, de sorte que le couple qui est appliqué par le frein de transmission (70) remplace la perte de frein moteur lorsque l'embrayage (16) est débrayé.

3. Système de transmission automatisée selon la revendication 1, **caractérisé en ce que** la vitesse du véhicule est enregistrée par l'unité de commande (34) lorsqu'une opération de changement de rapport à un rapport inférieur est amorcée.

4. Système de transmission automatisée selon l'une quelconque des revendications précédentes, **caractérisé en ce que** lorsque le couple qui est transmis par l'embrayage (16) est réduit à zéro, le changement de rapport est terminé, le régime du moteur est synchronisé au nouveau rapport et l'embrayage (16) est à nouveau embrayé.

5. Système de transmission automatisée selon la revendication 4, **caractérisé en ce que** lors du réembrayage de l'embrayage (16), le couple qui est appliqué par le frein de transmission (70) est guidé vers le bas jusqu'à ce que le couple de frein de transmission soit nul.

6. Système de transmission automatisée selon la revendication 5, **caractérisé en ce que** le couple de frein de transmission est guidé vers le bas afin de fournir un ralentissement souple du véhicule.

7. Système de transmission automatisée selon la revendication 6, **caractérisé en ce que** le couple de frein de transmission est guidé vers le bas pendant que l'embrayage (16) est réembrayé, la réduction du couple qui est appliqué par le frein de transmission (70) suivant l'augmentation du couple qui est transmis par l'embrayage (16).

8. Système de transmission automatisée selon la revendication 6 ou 7, **caractérisé en ce que** le couple qui est appliqué par le frein de transmission (70), divisé par le rapport du rapport enclenché, moins le couple moteur, est égal au couple effectif qui est transmis par l'embrayage (16).
